# EUROPEAN PATENT APPLICATION

(11) **EP 1 469 031 A2**
(43) Date of publication of application: **20.10.2004**
(21) Application number: 04252262.3
(22) Date of filing: 16.04.2004
(51) Int. Cl.: C08J 3/12, B29B 9/00, C08B 11/20

(54) **Granulation of nonionic cellulose ether**

(30) Priority: 18.04.2003 JP 2003113742
(71) Applicant: SHIN-ETSU CHEMICAL CO., LTD., Chiyoda-ku, Tokyo (JP)
(72) Inventor: Hayakawa, Kazuhisa, Shin-Etsu Chemical Co. Ltd, Nakakubiki-gun Niigata-ken (JP); Kobayashi, Kazuto, Shin-Etsu Chemical Co. Ltd, Nakakubiki-gun Niigata-ken (JP)
(74) Representative: Stoner, Gerard Patrick

(57) **Abstract**

A granular form of nonionic cellulose ether is prepared by adding dropwise or spraying an aqueous solution of wetter to a nonionic cellulose ether powder while fluidizing the powder, for thereby granulating, and drying. Granulation is accomplished without grinding. The granulated nonionic cellulose ether has the advantages of quick dissolution in water and minimized dusting.

## Description

This invention relates to a method for preparing a granular form of nonionic cellulose ether which is easy to handle due to minimized dusting, readily wettable with water, and quickly dissolvable in water with less tendency for clumping. A granular nonionic cellulose ether thus obtained is a further aspect

### BACKGROUND

In the prior art, nonionic cellulose ethers are used in a variety of applications such as cosmetic compositions and building applications using cements because they are more readily dissolved in salt solutions or metal ion-containing aqueous solutions than ionic cellulose ethers such as carboxymethyl cellulose. These nonionic cellulose ethers are generally manufactured by using pulp or the like as a raw material, effecting alkali cellulose-forming reaction with an alkaline solution and then etherifying reaction, washing with an organic solvent containing hot water or water, removing the liquid by filtration, and drying the thus purified nonionic cellulose ether in hot air, followed by grinding.

The nonionic cellulose ether powder obtained by this process, however, suffers from several problems.
(1) Since the nonionic cellulose ether powder has widely varying particle sizes and contains a large amount of fibrous fines (average particle size less than 150 µm), it is difficult to handle because of dusting.
(2) On use of nonionic cellulose ether in fine powder form, dust generates to adversely affect the working environment.
(3) Since the nonionic cellulose ether powder has widely varying particle sizes and contains a large amount of fibrous fines, it tends to form powder clumps upon dissolution and takes a long time to dissolve because of low solubility. For this reason, when it was desired to dissolve in water nonionic cellulose ethers such as methyl cellulose, hydroxypropyl methyl cellulose, hydroxyethyl methyl cellulose and the like, the fact that they are not dissolved in hot water at 90°C or higher imposed a cumbersome process of dispersing the cellulose ether in hot water preheated and then slowly cooling to assist in dissolution.

In view of problem (3), JP-B 48-6622 proposes a method of preventing formation of powder clumps in cold water by adding 0.01 to 15% by weight of a plasticizer selected from ether, ester and amine plasticizers to a nonionic cellulose ether powder, intimately admixing them, drying and grinding the mixture into coarse particles. The coarse product obtained by this method, however, has the problem that since a powder having a plasticizer and a wetter admixed therewith in particulate or lump form is dried and then ground, the material once densified by the admixing and drying steps is ground again into coarse particles having fibrous portions or a fine powder or granular form having fibrous matter on surfaces, which will form powder clumps in cold water. To overcome this problem, a large amount of water is added in the step of admixing the powder with the plasticizer, to thereby increase an apparent bulk density, followed by drying and grinding. The granular product thus obtained has too high a bulk density, leaving a problem that a long time is required for dissolution.

JP-A 6-166026 discloses a granulating method in which a cellulose powder is granulated by a special granulator and then dried to produce spherical granules containing only a few filaments and having almost uniform near sphericity and a substantially constant particle size. The method, however, fails to produce granules which can be dissolved in cold water without forming powder clumps. This is because nonionic cellulose ether is less wettable so that water cannot effectively penetrate into the granules produced.

To solve this problem, JP-A 2000-63565 discloses a particulate water-soluble cellulose ether in which a cellulose ether is combined with a crosslinker, acid and wetter and ground such that the amount passing through a 30-mesh sieve is up to 30% by weight and the amount remaining on a 200-mesh sieve is up to 30% by weight. The particulate cellulose ether thus produced is dusting-free and highly water wettable, and can be briefly dissolved in cold water without forming powder clumps. However, compatibility can decline if mutagenic aldehydes including monoaldehydes such as formaldehyde, butyl aldehyde, and glycerol aldehyde, and dialdehydes such as glyoxal, acetaldehyde, and terephthalaldehyde, or aldehydes which draw concerns about mutagen and raise an environmental hygiene issue are added as the crosslinker, or if expensive silicon compounds including tetramethoxysilane and alkylalkoxysilanes such as methyltrimethoxysilane and dimethyldimethoxysilane are added. Then the invention of JP-A 2000-63565 is not applicable to cosmetic compositions and suspension polymerization.

An object of the invention is to provide a method of preparing a granular form of nonionic cellulose ether having a uniform particle size distribution, an ability to quickly dissolve in cold water with controlled formation of powder clumps, an appropriate bulk density to dissolution, and ease of handling. Another object is to provide a granular nonionic cellulose ether obtained therefrom.

Inventors have found that by adding dropwise or spraying a powder-binding liquid containing a wetter to a nonionic cellulose ether powder while fluidizing the powder, granulating the wetted powder into granules, and drying, thereby obtaining granules without grinding, there can be produced a granular nonionic cellulose ether having an ability to quickly dissolve in cold water, an appropriate bulk density to dissolution, and ease of handling.

In one aspect, the present invention provides a method for preparing a granular form of nonionic cellulose ether, comprising the steps of adding dropwise or spraying a powder-binding liquid containing a wetter to a nonionic cellulose ether powder while fluidizing the powder, for thereby granulating, and drying. Thus the granulated nonionic cellulose ether is made without need for grinding.

In a preferred embodiment, the wetter is typically a nonionic, anionic or cationic surfactant. The nonionic cellulose ether powder is preferably such that the amount remaining on No. 140 (opening 106 µm) sieve described in the Japanese Pharmacopoeia, 14th Edition, B-1061 is up to 25% by weight. The nonionic cellulose ether is typically methyl cellulose, hydroxyethyl cellulose, hydroxypropyl methyl cellulose, hydroxyethyl methyl cellulose or hydroxyethyl ethyl cellulose.

Also contemplated herein is a granulated nonionic cellulose ether obtained by the above method. Preferably the granulated nonionic cellulose ether is sized such that the amount remaining on No. 30 (opening 500 µm) sieve described in the Japanese Pharmacopoeia, 14th Edition, B-1060 is up to 50% by weight and the amount passing through No. 140 (opening 106 µm) sieve described in the Japanese Pharmacopoeia, 14th Edition, B-1061 is up to 40% by weight.

### FURTHER EXPLANATIONS; OPTIONS AND PREFERENCES

According to the invention, a granular form of nonionic cellulose ether is prepared by adding dropwise or spraying a powder-binding liquid containing a wetter to a nonionic cellulose ether powder while fluidizing the powder.

Examples of suitable nonionic cellulose ether in powder form include methyl cellulose, hydroxypropyl methyl cellulose, hydroxyethyl methyl cellulose, hydroxyethyl ethyl cellulose, hydroxyethyl cellulose, hydroxypropyl cellulose, and hydroxybutyl cellulose, in powder form.

The preferred wetters are surfactants having an ability to facilitate water penetration. Examples of surfactants having such an ability include nonionic, anionic and cationic surfactants, but are not limited thereto.

Examples of nonionic surfactants include higher fatty acid ethers of polyoxyethylene such as polyoxyethylene oleyl ether, polyoxyethylene lauryl ether and polyoxyethylene stearyl ether, higher fatty acid esters of polyoxyethylene such as polyoxyethylene monooleate, polyoxyethylene laurate and polyoxyethylene stearate, fatty acid esters of sorbitan such as sorbitan stearate, and fatty acid esters of polyoxyethylene sorbitan ether such as polyoxyethylene sorbitan laurate.

Examples of anionic surfactants include esters and salts of sulfosuccinic acid such as dioctyl sodium sulfosuccinate and salts of alkylbenzenesulfonic acids such as sodium dodecylbenzenesulfonate.

Exemplary of cationic surfactants is octadecyltrimethylammonium chloride.

Of these surfactants, esters and salts of sulfosuccinic acid are preferred. Especially, dioctyl sodium sulfosuccinate is advantageous in enhancing the wetting effect of hydroxypropyl methyl cellulose among other nonionic cellulose ethers.

The amount of wetter added is preferably 0.1 to 3 parts by weight per 100 parts by weight of the nonionic cellulose ether. Less than 0.1 part by weight of the wetter may be insufficient to improve wetting with water whereas more than 3 parts by weight of the wetter may achieve little additional effects for such increments.

The nonionic cellulose ether powder used herein is prepared, for example, by a well-known method. The nonionic cellulose ether is typically manufactured by using pulp as a raw material, effecting alkali cellulose-forming reaction with an alkaline solution and then etherifying reaction, washing with an organic solvent containing hot water or water, effecting optional neutralizing treatment, removing the liquid by filtration, and drying. The resulting nonionic cellulose ether is ground, for example, by an impact mill, eventually yielding a nonionic cellulose ether powder. In a preferred embodiment, the powder has such a particle size that the amount remaining on No. 140 (opening 106 µm) sieve described in the Japanese Pharmacopoeia, 14th Edition, B-1061 is up to 25% by weight, especially up to 15% by weight. With this particle size, the particle diameter is not much increased in the subsequent granulating step (so that the time taken for dissolution is kept short). The amount remaining on No. 140 sieve may be zero.

The nonionic cellulose ether powder thus obtained is prepared while the viscosity (e.g. of a 2 wt% aqueous solution thereof at 20°) is measured e.g. by rotary viscometer or capillary viscometer. Conveniently, the management of the viscosity at this point enables the management of the viscosity of a granulated product.

The nonionic cellulose ether powder obtained by a procedure as described above is commercially available under the trade name of Metolose from Shin-Etsu Chemical Co., Ltd., Methocel from Dow Chemical, Benecel and Natrosol from Aqualon, Tylose from Clariant, Walocel from Bayer, and Nisso HPC from Nippon Soda Co., Ltd.

Next the nonionic cellulose ether powder is granulated without grinding, that is, by feeding the powder into an agitation granulator capable of fluidization or a fluidized-bed granulator, adding dropwise or spraying water and a wetter to the powder while fluidizing the powder, for the purpose of uniformly applying water and wetter to the powder, and drying the wetted powder in a suitable dryer such as a fluidized-bed dryer, tray dryer or drum dryer. Granules of nonionic cellulose ether are obtained in this way.

In the method, water is preferably used in an amount to provide a wetter concentration of 0.5 to 10% by weight, more preferably 1 to 5% by weight and to afford the above-described amount of wetter. An aqueous solution of the wetter, i.e., powder-binding liquid is preferably fed at a rate of 10 to 500 g/min, especially 50 to 200 g/min. Too low a feed rate may take a longer time to obtain the end product and lower productivity. At too high a feed rate, the wetter may non-uniformly deposit on the nonionic cellulose ether powder, failing to improve water wetting. The fluidizing rate of the powder is preferably such that an impeller is rotated at 500 to 1,000 rpm in a 33-liter vessel having a diameter of 350 mm which is charged with 3 kg of nonionic cellulose ether powder. Too low a fluidizing rate may fail to deposit the wetter uniformly and to form the desired granules whereas too high a fluidizing rate may increase the particle diameter beyond the desired level.

A temperature of 5 to 50°C is preferred when the binding liquid is fed to the powder. At too low a temperature, the wetter may become too viscous, failing to achieve uniform deposition. At too high a temperature, the aqueous solution of wetter may evaporate, failing to achieve uniform deposition.

The drying temperature is preferably in the range of 80 to 150°C, especially 90 to 120°C. Effective drying may not proceed at too low a temperature whereas too high a temperature may cause the thermal decomposition of nonionic cellulose ether.

The particle size of the granulated nonionic cellulose ether is not particularly limited as long as the granules are dissolvable in cold water without forming a significant level of clumps. In a preferred embodiment, the amount remaining on No. 30 (opening 500 µm) sieve described in the Japanese Pharmacopoeia, 14th Edition, B-1060 is up to 50% by weight, more preferably up to 5% by weight. The oversize fraction may even be zero. At the same time, the amount passing through No. 140 (opening 106 µm) sieve described in the Japanese Pharmacopoeia, 14th Edition, B-1061 is up to 40% by weight, more preferably up to 30% by weight. The undersize fraction is preferably at least 0.5% by weight. With respect to the sizing method, mechanical sieving as set out in the Japanese Pharmacopoeia, 14th Edition, B-1062 and 1063 is preferred for productivity, though not critical. If the particle size measured by such a method is coarser, a longer time is required for dissolution. If the particle size is finer, powder clumps are likely to form.

The granular nonionic cellulose ether obtained by the invention can be effectively dissolved in cold water without forming powder clumps which take a long time to dissolve as required in prior art nonionic cellulose ether powders. In the prior art, when it is desired to dissolve in water nonionic cellulose ether powders such as methyl cellulose, hydroxypropyl methyl cellulose, hydroxyethyl methyl cellulose and the like which are not dissolvable in hot water, a cumbersome process of dispersing the cellulose ether powder in hot water preheated in advance and then slowly cooling to assist in dissolution is employed. In contrast, we find that granulated nonionic cellulose ethers prepared as now proposed can be quickly dissolved in cold water above 0°C and below room temperature or water at a temperature of 5 to 70°C.

### EXAMPLE

Examples are given below for illustrating the invention, but the invention is not limited thereto.

### Example 1

A 33-liter fast fluidized-bed granulator New-Gra Machine SEG350 (Seishin Enterprise Co., Ltd.) equipped with three special impellers and one scraper was charged with 3 kg of hydroxypropyl methyl cellulose powder Metolose 60SH-4000 (Shin-Etsu Chemical Co., Ltd., the amount remaining on No. 140 (opening 106 µm) sieve described in the Japanese Pharmacopoeia, 14th Edition, B-1061 is 12% by weight). The powder was fluidized by rotating the impellers and scraper at 700 rpm. Separately 30 g of dioctyl sodium sulfosuccinate (Labisol A-80 by NOF Co., Ltd.) was weighed as a wetter and dispersed and dissolved in 2 kg of water. The solution was fed to an agricultural sprayer by which the solution was sprayed to the fluidized bed of hydroxypropyl methyl cellulose powder at a rate of 163 g/min.

The thus granulated hydroxypropyl methyl cellulose in entirety was fed to an air blowing/fluidizing dryer Best Ryuzer BR-30 (Seishin Enterprise Co., Ltd.) where a blower having a rated capacity of 8 m³/min was operated for 40 minutes to blow hot air at 105°C for drying, obtaining granules. The granules were such that the amount remaining on No. 30 (opening 500 µm) sieve described in the Japanese Pharmacopoeia, 14th Edition, B-1060 was 47% by weight and the amount passing through No. 140 (opening 106 µm) sieve described in the Japanese Pharmacopoeia, 14th Edition, B-1061 was 40% by weight.

Deionized water, 245 ml, at 25°C was contained in a 300-ml tall beaker equipped with an impeller rotating at 400 rpm. The granulated hydroxypropyl methyl cellulose, 5 g, was added to the beaker, after which the ingredients were agitated for 80 minutes, yielding a clump-free uniform viscous solution.

When 100 g of the granulated hydroxypropyl methyl cellulose was dropped on the floor from a height of 1 m, no vigorous dusting was observed.

### Example 2

The granular product as dried in Example 1 was sized by a separator Gyroshifter (Tokuju Corp.) such that the granular product passed through No. 25 (opening 600 µm) sieve described in the Japanese Pharmacopoeia, 14th Edition, B-1060, the amount remaining on No. 30 (opening 500 µm) sieve was 1.2% by weight, and the amount passing through No. 140 (opening 106 µm) sieve described in the Japanese Pharmacopoeia, 14th Edition, B-1061 was 12.2% by weight.

As in Example 1, 245 ml of deionized water at 25°C was contained in a 300-ml tall beaker equipped with an impeller rotating at 400 rpm. The sized hydroxypropyl methyl cellulose granular product was added. The time taken until a clump-free uniform viscous solution was measured, with a time of 18 minutes recorded.

A torque meter was connected to the motor for driving the impeller. The time taken until the torque of agitation became constant was measured, with a time of 18 minutes recorded again. These data indicate that the sized granular product is dissolved in water within 18 minutes.

When 100 g of the sized granular product was dropped on the floor from a height of 1 m, no vigorous dusting was observed.

### Example 3

A granular product was prepared as in Example 1 except that hydroxypropyl cellulose M by Nippon Soda Co., Ltd. was used instead of the hydroxypropyl methyl cellulose powder, and polyoxyethylene oleyl ether Nonion E-215 (NOF Corp.) was used as the wetter.

As in Example 2, the granular product was sized such that the amount remaining on No. 30 (opening 500 µm) sieve described in the Japanese Pharmacopoeia, 14th Edition, B-1060 was 4.2% by weight and the amount passing through No. 140 (opening 106 µm) sieve described in the Japanese Pharmacopoeia, 14th Edition, B-1061 was 30.2% by weight.

A time taken for the granular product to be dissolved was measured as in Example 2, finding that dissolution was completed within 100 minutes.

When 100 g of the granular product was dropped on the floor from a height of 1 m, no vigorous dusting was observed.

### Comparative Example 1

The granular product as dried in Example 1 was ground on an impact mill Victory Mill (Hosokawa Micron Co., Ltd.) having a screen diameter of 1 mm, obtaining a powder in which the amount remaining on No. 30 (opening 500 µm) sieve described in the Japanese Pharmacopoeia, 14th Edition, B-1060 was nil and the amount passing through No. 140 (opening 106 µm) sieve described in the Japanese Pharmacopoeia, 14th Edition, B-1061 was 75% by weight.

As in Example 1, 245 ml of deionized water at 25°C was contained in a 300-ml tall beaker equipped with an impeller rotating at 400 rpm. The milled hydroxypropyl methyl cellulose powder was added, after which the ingredients were agitated for 100 minutes. During agitation, powder clumps continued to exist and the solution did not become uniform.

When 100 g of the milled hydroxypropyl methyl cellulose powder was dropped on the floor from a height of 1 m, vigorous dusting was observed.

According to the invention, a granular form of nonionic cellulose ether is obtained which has the advantages of quick dissolution in water and minimized dusting while avoiding an environmental hygiene problem.

## Claims

1. A method for preparing a granular form of nonionic cellulose ether, comprising the steps of adding dropwise or spraying a powder-binding liquid containing a wetter to a nonionic cellulose ether powder while fluidizing the powder, for thereby granulating, and drying, thereby yielding granulated nonionic cellulose ether.

2. The method of claim 1 wherein the wetter is a nonionic, anionic or cationic surfactant.

3. The method of claim 1 or 2 wherein the nonionic cellulose ether powder is such that the amount remaining on No. 140 (opening 106 µm) sieve described in the Japanese Pharmacopoeia, 14th Edition, B-1061 is up to 25% by weight.

4. The method of claim 1, 2 or 3 wherein the nonionic cellulose ether is methyl cellulose, hydroxyethyl cellulose, hydroxypropyl methyl cellulose, hydroxyethyl methyl cellulose or hydroxyethyl ethyl cellulose.

5. A method according to one of the preceding claims in which the resulting granulated nonionic cellulose ether is dissolved in water without grinding it.

6. A granulated nonionic cellulose ether obtainable by a method of any one of claims 1 to 4.

7. The granulated nonionic cellulose ether of claim 6 which is sized such that the amount remaining on No. 30 (opening 500 µm) sieve described in the Japanese Pharmacopoeia, 14th Edition, B-1060 is up to 50% by weight and the amount passing through No. 140 (opening 106 µm) sieve described in the Japanese Pharmacopoeia, 14th Edition, B-1061 is up to 40% by weight.
